# EUROPEAN PATENT APPLICATION

(11) **EP 1 642 799 A2**
(43) Date of publication of application: **05.04.2006**
(21) Application number: 04257432.7
(22) Date of filing: 30.11.2004
(51) Int. Cl.: B61F 5/30

(54) **Axle box suspension for railway vehicle**

(30) Priority: 29.09.2004 JP 2004283599
(71) Applicant: HITACHI, LTD., Chiyoda-ku Tokyo 100-8280 (JP)
(72) Inventor: Watanabe, Takao c/o Hitachi, Ltd. I.P. Group, Chiyoda-ku Tokyo 100-8220 (JP); Hiraishi, Motomi c/o Hitachi, Ltd. I.P. Group, Chiyoda-ku Tokyo 100-8220 (JP); Iwasaki, Katsuyuki c/o Hitachi, Ltd. I.P. Group, Chiyoda-ku Tokyo 100-8220 (JP); Nakamura, Minoru c/o Hitachi, Ltd. I.P. Group, Chiyoda-ku Tokyo 100-8220 (JP)
(74) Representative: Paget, Hugh Charles Edward

(57) **Abstract**

The object of the present invention is to provide an axle box suspension for a railway car with a simple structure to fix coil springs and support rubbers, and enabling easy mounting operation. Coil springs 21 and 22 are disposed on top of an axle box 10. Support rubbers 30 are disposed on front and rear portions of the axle box 10 with respect to the traveling direction of the railway car. A support shaft 31 is disposed at the axial center position of the support rubber 30, and the upper end of the support shaft 31 is passed through the side beam 6. The upper end of the support shaft 31 protruding from the upper surface of the side beam 6 is fixed via a nut. The operation of fixing the support shaft 31 to the side beam 6 by tightening the nut 40 can be performed at the upper surface area of the side beam 6, so the operation is facilitated.

## Description

### BACKGROUND OF THE INVENTION

### Field of the invention

The present invention relates to an axle box suspension for a railway car.

### Description of the related art

In normal, a bogie of a railway car is constructed so that a bogie frame is supported via two axles. The bogie frame is composed of two side beams and a cross beam connecting the side beams. An axle box housing a bearing is disposed at both ends of each axle, and each axle box supports the bogie frame to the axle. Each axle box supports the bogie frame via an elastic support member comprising a coil spring, a laminated rubber or a roll rubber. The axle box suspension for a railway car determines the positions of the axles with respect to the bogie frame in the traveling direction and the left/right direction of the car. Further, the axle box suspension elastically supports the bogie frame with respect to the axle. As disclosed in Patent Document 1, Japanese Patent Publication No. 06-45342, the axle box suspension for a railway car is composed of a support rubber formed of cylindrical laminated rubbers and a coil spring. The coil spring and the support rubber are disposed so that their central axes are positioned substantially perpendicularly. The coil spring and the support rubber are disposed between an upper axial spring seat and a lower axial spring seat. A support rubber is disposed inside the coil spring. The coil spring and the support rubber are disposed at front and rear sides of the axle box in the traveling direction of the car. Thus, plural coil springs and plural support rubbers are used to elastically support the bogie frame with respect to the axles. Plural coil springs support the perpendicular load of the bogie frame. Plural support rubbers determine the position of the axles with respect to the bogie frame. Each support rubber is designed to receive the load both in the traveling direction and left/right direction of the car between the axle and the bogie frame.

The upper axle spring seat fixing the coil spring and the support rubber to the bogie frame is fixed to a support seat disposed on the lower surface of the side beam of the bogie frame via an engagement member such as a bolt and a nut. The support seat is disposed on the lower surface of the side beam, and the outer circumference portion on the left and right sides thereof are protruded beyond the side walls of the side beam. In order to fix the upper axle spring seat to the support seat, bolt holes are formed to the outer circumference portion of the support seat protruding beyond the side walls of the side beam, and bolts are tightened from the upper surface side of the support seat. On the outer side of the side beam in the width direction of the bogie, the bolt tightening operation is relatively easy since there are no other members disposed in that area. On the other hand, wheels attached to the axle are disposed on the inner side of the side beam in the width direction of the bogie, making the bolt tightening operation in this area difficult since the operation must be carried out through the narrow gap formed between the side beam and the wheel.

Two axles are disposed as mentioned earlier in a normal bogie of a railway car, and the two axles must be disposed in parallel. In order to adjust the location of the two axles, the holes through which are inserted the bolts for engaging the support seat on the side beam and the upper axle spring seat are formed as elongated (slotted) holes. When fixing the upper axle spring seat to the support seat, this elongated hole is used to adjust the positions of the axles so as to align the two axles correctly. Four bolts as engagement members are required per one upper axle spring seat, and since four upper axle spring seats are disposed per one axle, there are a total of 32 bolts necessary per one bogie. Of these bolts, half must be tightened through the gap between the side beams and the wheels, which required excessive time and work.

The support rubber is disposed in the inner side of the coil spring. The inner diameter of the coil spring must be large enough to house the support rubber, so the outer diameter thereof is also relatively large. The axle box supporting the coil spring is equipped with a supporting structure having a large diameter corresponding to the outer diameter of the coil spring. Therefore, it was required for the axle box to have a relatively large space for supporting the coil spring, which prevented the size and weight of the axle box from being reduced. Moreover, in a bogie equipped with the aforementioned axle boxes, the coil springs were supported on both sides of each axle box in the traveling direction of the car, so it was necessary to dispose large-sized support seats. Therefore, it was necessary to provide to the side beams spaces for disposing such large-sized support seats, which inevitably increased the size of the side beams, hindering the effort to reduce the size and weight of the bogie frame itself.

### SUMMARY OF THE INVENTION

The object of the present invention is to provide an axle box suspension for a railway car, which is capable of facilitating the operation related to fixing the support rubber to the bogie frame.

Another object of the present invention is to provide an axle box suspension for a railway car, which is equipped with an axle box that is small and light weight.

The object of the present invention can be achieved by an axle box suspension for a railway car comprising: an axle box disposed on an axle via a bearing; a coil spring disposed on the axle box for elastically supporting a bogie frame with respect to the axle box; support rubbers disposed on rubber support portions formed on both sides of the axle box to the traveling direction of the car; and support shafts each having an end inserted to an axial center position of the support rubber and another end fixed to a side beam of the bogie frame. Preferably the support shaft passes through the side beam of the bogie frame.

The support rubber may be any form of support member having elastomeric load-supporting material.

Moreover, the object of the present invention can be achieved by an axle box suspension for a railway car comprising: a coil spring for elastically supporting a bogie frame; an axle box having on a top portion thereof a support seat for supporting the coil spring, and further having two holes opening upward for retaining support rubbers; support rubbers disposed in said holes formed to the axle box, respectively; and two support shafts each having a lower end portion retaining said support rubber and an upper end portion passed through and fixed to a side beam of the bogie frame.

### BRIEF DESCRIPTION OF THE DRAWINGS

FIG. 1 is an explanatory view of an axle box suspension for a railway car according to the present invention;
FIG. 2 is an explanatory view of a support rubber; and
FIG. 3 is an explanatory view of a support rubber.

### DETAILED DESCRIPTION OF THE PREFERRED EMBODIMENTS

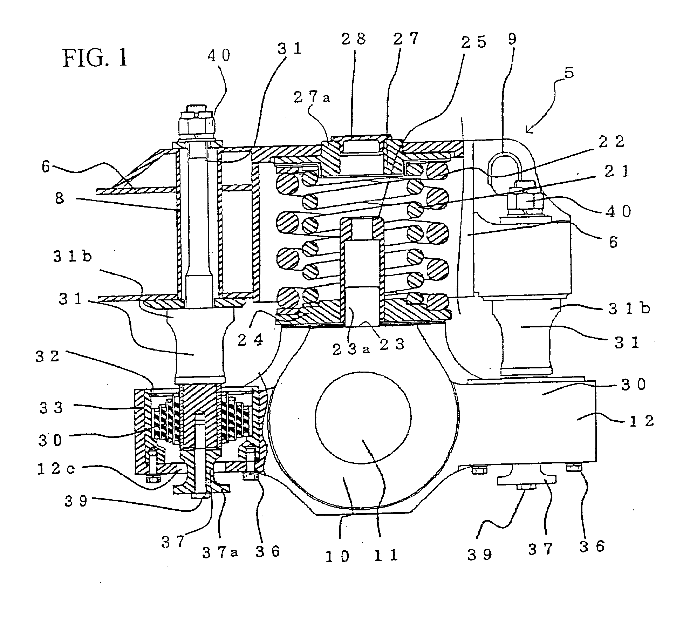

One preferred embodiment according to the present invention will now be explained with reference to FIGS. 1 through 3. A bogie frame 5 illustrated in FIG. 1 shows an end portion of a side beam 6 on which an axle box 10 is disposed. The axle box 10 is disposed on both ends of an axle 11 via a bearing. The axle box 10 has on both sides thereof with respect to the traveling direction of the car a rubber support portion 12, respectively. The rubber support portion 12 is formed to have a semicircular outer circumference portion and a round inner hole. This hole is opened to the upper direction, and the center axis thereof is disposed in the perpendicular direction. A support rubber 30 mentioned later is mounted to the hole of each rubber support portion 12. A coil spring support seat 23 is formed to the top portion of the axle box 10 to which is fixed a lower seat 24 receiving the lower end of coil springs 21 and 22. The coil spring support seat 23 is equipped with a projection 23a that fits to a through hole formed to the center of the lower seat 24. The coil springs 21 and 22 are disposed so that their respective center axes correspond. The reason why two coil springs 21 and 22 are disposed is that it is possible to achieve the most suitable spring characteristics by combining coil springs having different spring characteristics. The lower seat 24 is structured so that its upper surface corresponds to the lower end shapes of the coil springs 21 and 22, and the lower surface thereof is substantially flat. A spacer for adjusting the height of the bogie frame is disposed between the lower seat 24 and the support seat 23 of the axle box 10. An upper seat 27 disposed on the upper end side of the coil springs 21 and 22 is structured so that its lower surface corresponds to the upper end shapes of the coil springs 21 and 22, similar to the lower seat 24. On the upper surface of the upper seat 27 is formed a cylindrical projection 27a. The projection 27a fits to the upper plate of the side beam 6, by which the position of the coil springs 21 and 22 are determined with respect to the bogie frame 5. Further, the projection 27a has a through hole formed to the center thereof, to which a bolt is inserted for applying pre-compression force to the coil springs 21 and 22 and holding the same by the upper seat 27 and the lower seat 24. A cylindrical retention tube 25 is attached to the through hole of the lower seat 24. The retention tube 25 is hollow, and to the lower end thereof is inserted a projection 23a of the axle box 10. Further, a screw thread is formed to the inner surface of the upper end of the retention tube 25, which is to be engaged with the bolt being attached when pre-compression force is applied to the coil springs 21 and 22. A lid 28 is disposed to the through hole of the upper seat 27 to prevent dust from entering. Substantially the entire bodies of the coil springs 21 and 22 are disposed within the side beam 6 with the projection 27a of the upper seat 27 fit to the upper plate of the side beam 6. To the side beam 6 is formed a substantially cylindrical casing for storing the coil springs 21 and 22.

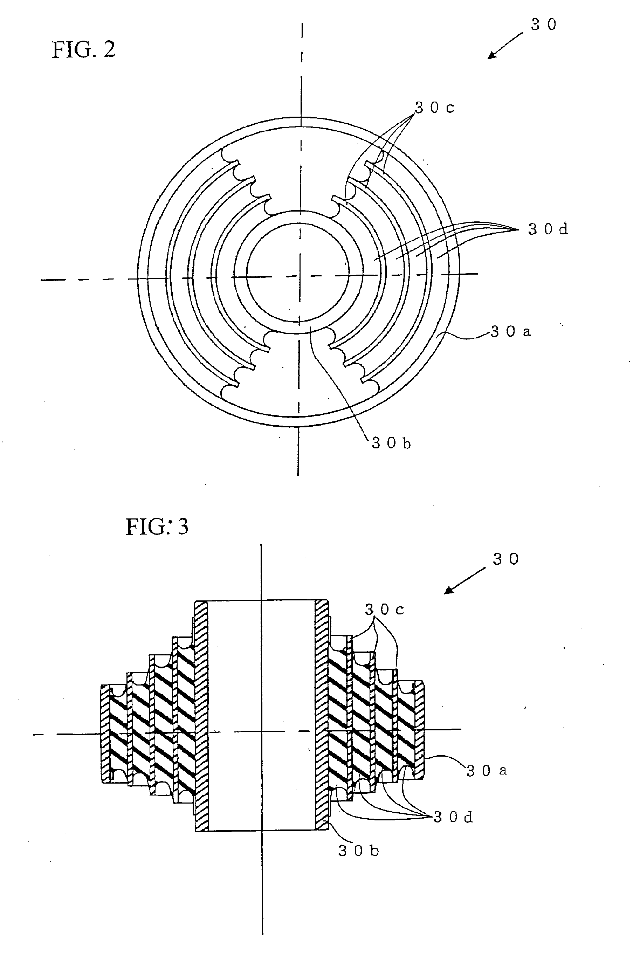

As described, on each rubber support portion 12 of the axle box 10 is formed a hole opening in the upper direction, and to this hole is mounted the support rubber 30. As shown in FIGS. 2 and 3, an outer cylinder 30a and an inner cylinder 30b constituting the support rubber 30 are cylindrically shaped, and plural plate members 30c disposed between the outer cylinder 30a and the inner cylinder 30b are shaped so that portions of the cylinder are cut off. Each plate member 30c is formed so that the radius of the circular arc portion is reduced as it gets closer to the inner side. The outer cylinder 30a, the inner cylinder 30b and the plural plate members 30c are disposed so that their center of curvatures coincide. The outer cylinder 30a, the inner cylinder 30b and the plural plate members 30c are all made of metallic materials. Rubber 30d is attached by vulcanization to the spaces between the outer cylinder 30a, the plurality of plate members 30c and the inner cylinder 30b, constituting a laminated rubber. The laminated rubber constitutes the support rubber 30. The portions where the plate members 30c and the rubber 30d are discontinued between the outer cylinder 30a and the inner cylinder 30b constitute hollow spaces. The support rubber 30 is disposed on the axle box 10 so that the direction in which the plate members 30c and rubber 30d are layered corresponds to the traveling direction of the car. By arranging support rubbers 30 to the axle boxes 10 in the above-mentioned manner, it is possible to harden the spring characteristic of the axle box 10 in the traveling direction of the car while softening the spring characteristic thereof in the direction orthogonal to the traveling direction of the car.

As shown in FIG. 1, the support rubber 30 is press-fit to a cylindrical rubber receive seat 33, and a hold metal 32 is disposed to the rim portion of the rubber receive seat 33 so that the support rubber 30 will not come off. Incidentally, if a screw thread is formed to the outer periphery of the hold metal 32 and a screw thread is formed also to the inner surface of the rubber receive seat 33 so as to enable the two members to be screwed onto each other, and if the support rubber 30 is fixed firmly to the rubber receive seat 33, it is possible to adopt a structure in which the support rubber 30 is inserted to the rubber receive seat 33. In such case, the support rubber 30 is not necessarily press-fit to the rubber receive seat 33. The rubber receive seat 33 is structured so as to retain the outer cylinder 30a of the support rubber 30, and the plate members 30c and the inner cylinder 30b are supported movably in the axial direction. The rubber receive seat 33 is fit to the hole formed to the rubber support portion 12 of the axle box 10, and the lower portion thereof is fixed via plural bolts 36 to the rubber support portion 12. The outer cylinder 30a of the support rubber 30 is formed so that its height in the axial direction is lower than that of the inner cylinder 30b, so it is possible to form to the rubber receive seat 33 screw holes to which the bolts 36 are engaged.

To the inner cylinder 30b of the support rubber 30 is inserted the lower end of a support shaft 31 disposed with its axial center coincided. The support shaft 31 has a flange for receiving the upper end of the inner cylinder 30b, so as to transmit the perpendicular load applied from the side beam 6 to the support shaft 31 to the support rubber 30. The upper end of the support shaft 31 is inserted to a penetrating cylinder 8 perpendicularly passing through and fixed to the side beam 6. The upper end portion of the support shaft 31 is protruded above the upper surface of the side beam 6 beyond the penetrating cylinder 8, and to the protruded upper end of the support shaft 31 is formed a screw thread. To the center portion of the support shaft 31 is formed a flange 31b for receiving the perpendicular load from the lower surface of the side beam 6 via a seat metal. A nut 40 engaged to the screw thread formed to the upper end of the support shaft 31 securely fixes the support shaft 31 to the side beam 6 . Further, at the outer circumference surface of the center portion of the support shaft 31 is formed a parallel flat surface for applying a spanner, to prevent the support shaft 31 from rotating idly when tightening the nut 40. The inner diameter of the penetrating cylinder 8 is larger than the outer diameter of the support shaft 31. By forming a gap between the penetrating cylinder 8 and the support shaft 31, the position of the axle box 10 with respect to the bogie frame 5 can be adjusted.

On the lower end surface of the support shaft 31 is attached a hanging ring 37 via a bolt 39. The hanging ring 37 is inserted through the through hole 12c formed to the lower surface of the rubber support portion 12 after the support rubber 30 is fixed to the rubber support portion 12 by the rubber receive seat 33. On the lower end side of the hanging ring 37 is formed a flange 37a that is larger than the diameter of the through hole 12c. The flange 37a is disposed so as to receive the axle box 10 and to prevent the box from falling when the bogie frame 5 is suspended by a crane by engaging a hook to a suspension hole 9. However, during normal traveling states, a predetermined gap is secured between the flange 37a and the rubber support portion 12 so as to prevent the flange 37a from coming into contact with the lower surface of the rubber support portion 12 of the axle box 10.

In the above description, the structure of the rubber support portion 12 disposed on the left side of the axle box 10 in the drawing of FIG. 1 was described, but the rubber support portion 12 disposed on the right side of the axle box 10 is also structured substantially similarly. However, the support shaft 31 disposed on the right side of the axle box 10 is shorter in the axial direction than the support shaft 31 on the left since it is attached to the side wall portion of the side beam 6 with respect to the traveling direction of the car.

With respect to the above-mentioned structure, the procedure for assembling the axle box suspension will be explained. At first, a support rubber 30 is press-fit to the rubber receive seat 33, and a hold metal 32 is attached to the inner surface of the rubber support seat 33 to securely hold and prevent the support rubber 30 from falling from the rubber support seat 33. Next, the rubber support seat 33 is inserted to the hole formed to the rubber support portion 12 of the axle box 10 from above, and fixed thereto via bolts 36. In this state, the support shaft 31 is inserted to the inner cylinder 30b of the support rubber 30 from above, and the hanging ring 37 is inserted to the through hole 12c from the bottom side of the rubber support portion 12. Thereafter, the hanging ring 37 is fixed to the support shaft 31 via a bolt 39. The axle box 10 is already attached to the end of the axle 11 via a bearing.

The coil springs 21 and 22 are set to an assembling jig with the coil spring 21 arranged within the coil spring 22 and having the lower seat 24 and the upper seat 27 sandwiching the coil springs 21 and 22 axially. Then, the assembling jig applies necessary load to the lower seat 21 and upper seat 27 to provide pre-compression force to the coil springs 21 and 22. When the coil springs 21 and 22 are compressed to a predetermined height by the applied load, a bolt is inserted through the through hole formed to the upper seat 27 which is screwed to the retention tube 25 fixed to the lower seat 24. By this operation, the coil springs 21 and 22 are maintained at a pre-compressed status. In this state, the coil springs 21 and 22, the lower seat 24 and the upper seat 27 are removed from the assembling jig. Then, the pre-compressed coil springs 21 and 22 are placed on a coil spring support seat 23 of the axle box 10 to which two support shafts 31 are attached. At this time, the projection 23a on the coil spring support seat 23 is inserted to the hole formed to the lower seat 24.

Axle boxes 10 assembled in the manner mentioned above are attached to both ends of the axle 11, and two of such axles 11 are disposed in parallel. In this state, while having the axle boxes 10 retained by a positioning jig, a bogie frame 5 is mounted on the two axles 11 from above. At this time, each support shaft 31 disposed to each axle box 10 is inserted to a penetrating cylinder 8 of the side beam 6. Moreover, coil springs 21 and 22 disposed on the coil spring support seat 23 are stored in a casing formed in the side beam 6.

A seat is disposed on the upper surface of the flange 31b of the support shaft 31. The upper end of the support shaft 31 protrudes above the side beam 6 to which is attached a seat and a nut 40 screwed thereon. By tightening the nut 40, the support shaft 31 is firmly fixed to the side beam 6. Upon tightening the nut 40, the axle 11 is accurately positioned to the bogie frame 5 using the gap between the penetrating cylinder 8 and the support shaft 31, and after the positioning is completed, the nut 40 is tightened.

The projection 27a on the upper seat 27 disposed on the upper end of the coil springs 21 and 22 is fit to the through hole formed to the upper panel of the side beam 6, and the projection 27a protrudes from the upper surface of the side beam 6. In this state, the bolt maintaining the pre-compressed state of the coil springs 21 and 22 is removed. In this manner, the bogie frame 5 is mounted on two axles 11, and the assembly of the axle box suspension is completed.

According to the above-described arrangement, the support shafts 31 positioning the support rubber 30 to the bogie frame 5 are structured so that their upper ends protrude from the upper surface of the side beam 6 of the bogie frame 5. Therefore, the nut 40 used to fix each support shaft 31 to the side beam 6 can be tightened at the upper surface area of the side beam 6. Thus, the tightening operation can be carried out easily since there is no obstacle to the tightening operation compared to the prior art structure. In the prior art, the support seat receiving the upper axle spring seat was designed so that the receive surface of the support seat was so large that it protruded beyond the lower surface of the side beam in order to assure sufficient strength and rigidity with respect to the force applied to the axle box in the traveling direction of the car and in the direction perpendicular thereto. In contrast, the support shaft 31 of the present embodiment is fixed at two portions, the upper surface portion and the lower surface portion, to the side beam 6. Therefore, the flange 31b of the support shaft 31 is pressed firmly against the lower surface of the side beam 6 via a washer and fixed thereto so that it will not move horizontally. Further, the top end of the support shaft 31 is pressed against the upper surface of the side beam 6 via a washer by tightening the nut 40, which is fixed so that it will not move horizontally. As described, the support shaft 31 is fixed to the side beam 6 at lower and upper surfaces, and therefore, ensures sufficient strength and rigidity even when horizontal load is applied to the support shaft 31 from the axle box 10. Unlike the prior art arrangement, there is no need to form a wide and large support surface on the lower surface of the side beam. Further, according to the present embodiment, the support shaft 31 is fixed to the side beam 6 at substantially the same position as the receive surface for receiving the coil springs 21 and 22 on the side beam 6 which is located even above the upper surface of the side beam 6, so as to widen the distance between the two support portions of the support shaft 31. Therefore, the present embodiment enables a more compact structure compared to the prior art arrangement, without having members protrude beyond the side wall of the side beam 6. Furthermore, according to the present arrangement, the axle 10 can be accurately positioned using the gap between the penetrating cylinder 8 and the support shaft 31, so there is no need to provide a separate mechanism for adjusting the position of the axle 10.

Further, as for the operation for attaching the coil springs 21 and 22, the operation is completed simply by arranging the pre-compressed coil springs 21 and 22 on the coil spring support seat 23 of the axle box 10, and with the bogie frame 5 mounted thereto, removing the bolt. The operation of removing the bolt is easy since it can be performed from the upper side of the side beam 6 and there is no obstacle to the operation, and the operation can be completed in a short time.

Moreover, the present rubber support portion 12 of the axle box 10 does not need to support the coil spring which was necessary in the prior art, so it is required only to have a size sufficient to support the support rubber 30. Therefore, the rubber support portion 12 of the axle box 10 can be made smaller compared to the prior art axle box, and so the axle box 10 itself can be made smaller and reduced in weight. Furthermore, since the axle box 10 is reduced in size, the portion of the side beam 6 supporting the axle box can also be reduced in size compared to the prior art arrangement, and thus the size and weight of the bogie frame 5 can be reduced as a result.

The present embodiment was explained as being applied to a bogie with two axles havingwing-type axle boxes, but the present invention is not limited to such example, and can exert substantially the same effect when applied to a one-axle bogie adopting wing-type axle boxes.

## Claims

1. An axle box suspension for a railway car comprising:
a coil spring for elastically supporting a bogie frame;
an axle box having on a top portion thereof a support seat for supporting the coil spring, and further having two holes opening upward for retaining support rubbers;
support rubbers disposed in said holes formed to the axle box, respectively; and
two support shafts each having a lower end portion retaining said support rubber and an upper end portion passed through and fixed to a side beam of the bogie frame.

2. The axle box suspension for a railway car according to claim 1, wherein each support rubber is press-fit to a rubber receive seat, and the rubber receive seat is inserted to a rubber support portion formed to front and rear portions of the axle box in the traveling direction of the car, the rubber receive seat being fixed by a bolt from a lower surface of the rubber support portion.

3. The axle box suspension for a railway car according to claim 2, wherein a hanging ring is protruded below the lower surface of the rubber support portion, and the hanging ring is secured to the support shaft by a bolt.

4. The axle box suspension for a railway car according to claim 1, wherein the support shaft has a flange for receiving a lower surface of the side beam, the outer circumference of the flange having two axially parallel planes cut off, the two cut off planes being formed in parallel when seen from a width direction of the bogie.

5. The axle box suspension for a railway car according to claim 4, wherein the cut off planes is visible from a side direction of the bogie.

6. An axle box suspension for a railway car comprising:
an axle box disposed on an axle via a bearing;
a coil spring disposed on the axle box for elastically supporting a bogie frame with respect to the axle box;
support rubbers disposed on rubber support portions formed on both sides of the axle box to the traveling direction of the car; and
support shafts each having an end inserted to an axial center position of the support rubber and another end passing through and fixed to a side beam of the bogie frame.

7. The axle box suspension for a railway car according to claim 6, wherein
the axle box is disposed on both ends of the axle; and
two said axles are disposed in parallel to one bogie frame, the bogie frame being supported via the coil spring and the support rubber on the axle boxes on the two axles.

8. The axle box suspension for a railway car according to claim 6, wherein a support seat for the coil spring is formed on a top portion of the axle box at the center of the traveling direction of the car, and a storage box for storing the coil spring is formed to the side beam of the bogie frame.
